# EUROPEAN PATENT SPECIFICATION

(11) **EP 2 219 476 B1**
(45) Date of publication and mention of the grant of the patent: **20.04.2016**
(21) Application number: 08850440.2
(22) Date of filing: 11.11.2008
(51) Int. Cl.: A23L 33/00, A23L 33/10, A23C 11/02, A23D 9/00, C11C 3/10

(54) **INFANT FORMULA COMPOSITION**
BABYNAHRUNGSZUSAMMENSETZUNG
COMPOSITION D'ALIMENTATION INFANTILE

(30) Priority: 14.11.2007 EP 07254463
(43) Date of publication of application: 25.08.2010
(73) Proprietor: Loders Croklaan B.V., 1521 AZ Wormerveer (NL)
(72) Inventor: YAN, Youchun, NL-1520 AA Wormerveer (NL); BHAGGAN, Krishnadath, NL-1520 AA Wormerveer (NL); SCHMID, Ulrike, NL-1521 AZ Wormerveer (NL); MONSTER, Jeroen, NL-1521 AZ Wormerveer (NL)
(74) Representative: Potter Clarkson LLP
(86) International application number: PCT/EP2008/009506
(87) International publication number: WO 2009/062663

(56) References cited:
- EP-A- 0 496 456
- WO-A-94/26855
- WO-A-2006/114791
- WO-A-2007/029015
- WO-A-2007/029018
- US-A- 4 876 107
- US-B1- 6 297 279

## Description

The present invention relates to a fat blend, a fat composition, an infant formula comprising the fat blend or fat composition and a process for preparing the same.

Infant formula is an artificial substitute for human breast milk. Besides breast milk, infant formula is the only other infant milk which the medical community considers nutritionally acceptable for infants under the age of one year. Cow's milk is not recommended because it does not contain sufficient vitamin E, iron or essential fatty acids, which can make infants fed on cow's milk anaemic.

There are currently a variety of commercially available infant formulae, each one designed to meet the specific nutritional needs of a particular infant group. Infant formulae are commercially available as powders, ready-to-feed liquids, and liquid concentrates.

EP-A-0209327 discloses milk replacement fat compositions comprising the triglyceride 1,3-dioleoyl-2-palmitoyl glyceride (OPO), which is known to be an important component of milk fat.

EP-A-0496456 discloses human milk fat substitutes comprising OPO-type triglycerides optionally blended with 0-40wt% butterfat.

WO 94/26855 relates to an interesterified triglyceride mixture comprising at least 10wt% palmitic acid residues, wherein the palmitic acid residues are distributed in the triglycerides in such a way that at least 35wt% of the palmitic acid residues are bonded in the 2-position, and comprising at least 10wt% of saturated medium chain fatty acid residues (C8-C12), such that the sum of the triglycerides with carbon number (42+44+46) is at least 10wt%.

US 2,604,403 discloses a food composition suitable for human infant nutrition comprising an electrodialyzed whey containing in its solid content less than 4% of ash.

WO 2006/114791 relates to human milk fat substitutes, processes for their preparation, uses thereof and fat blends and infant formulae containing them.

CN-A-101061819 discloses an infant formula milk powder with a modified fatty acid structure.

There is a continuing need for infant formulae that can be produced economically and that have improved properties selected from one or more of flavour properties, dispersion properties and/or whiteness of colour.

According to an aspect of the invention, there is provided an infant formula as defined in the appended claim 1.

In a further aspect of the invention, there is provided a process for preparing an infant formula as defined in the appended claim 7.

The fat blend comprises from 55 to 70% by weight of at least one liquid oil, more preferably from 60 to 65% by weight of at least one liquid oil. Preferably, the liquid oils that are used in the fat compositions are vegetable oils. By this, it is meant that the oils are principally or wholly derived from vegetable sources, either directly or indirectly, rather than being derived from animals. Liquid oils may be single oils or mixtures of two or more different oils. Examples of suitable vegetable oils include sunflower oil, high oleic sunflower oil, soybean oil, safflower oil, coconut oil, palm kernel oil and rapeseed oil and mixtures thereof. Despite the high liquid oil content of the fat blend, when the fat blend is mixed with milk fat the resulting infant formula is surprisingly stable and has improved organoleptic properties, such as an improved taste, compared with conventional infant formulae. The infant formula may also be more efficacious.

A preferred liquid oil comprises a mixture of sunflower oil and soybean oil. More preferably, the fat blend comprises from 10 to 20% by weight, more preferably from 13 to 17% by weight of sunflower oil and/or from 40 to 55% by weight, more preferably from 44 to 52% by weight of soybean oil.

The fat blend preferably has a Solid Content Index measured by NMR-pulse on non-stabilised fats within the following ranges: N0= 35-55; N10= 25-50 and N30 </= 10. These values were preferably obtained by melting the fat blend at 80 °C, holding at 60 °C or higher for at least 10 minutes, cooling to 0°C and holding at 0°C for 16 hours, heating to the measurement temperature N and holding at that temperature for 30 minutes before measuring the N value.

The triglyceride composition comprises from 40 to 50% by weight of saturated fatty acid residues having 16 carbon atoms and from 40 to 50% by weight of unsaturated fatty acid residues having 18 carbon atoms and one double bond, wherein 50 to 60% by weight, such as from 52 to 57% by weight of the saturated fatty acid residues having 16 carbon atoms are present at the 2-position in a triglyceride.

Preferably, the triglyceride composition comprises a weight ratio of unsaturated fatty acid residues having 18 carbon atoms and one double bond (C18:1; oleic acid) to saturated fatty acid residues having 16 carbon atoms (C16:0; palmitic acid) of at least 2:3, more preferably at least 1:1. Most preferably, the triglyceride composition comprises a weight ratio of C18:1 to C16:0 of from 1:1 to 5:2, even more preferably from 1.2:1 to 2:1.

The fat blend comprises from 0.1 to 1.5% by weight, more preferably from 03 to 1.0% by weight of saturated fatty acid residues having 12 to 14 carbon atoms. When a fat blend comprising such low levels of saturated fatty acid residues having 12 to 14 carbon atoms is used in an infant formula, a much better tasting product may be formed.

Saturated fatty acid residues having 16 carbon atoms constitute from 20 to 27% by weight, more preferably from 22 to 25% by weight of the fat blend. The saturated fatty acid residues having 16 carbon atoms are typically palmitic acid.

The fat blend comprises:
(i) from 0.1 to 1.5% by weight, more preferably from 0.3 to 1% by weight of saturated fatty acid residues having from 12 to 14 carbon atoms;
(ii) from 20 to 27% by weight, more preferably from 22 to 25% by weight of saturated fatty acid residues having 16 carbon atoms;
(iii) from 2 to 6.5% by weight, more preferably from 2.5 to 6% by weight of saturated fatty acid residues having 18 carbon atoms;
(iv) from 28 to 37% by weight, more preferably from 30 to 35% by weight of unsaturated fatty acid residues having 18 carbon atoms and one double bond;
(v) from 30 to 40% by weight, more preferably from 32 to 38% by weight of unsaturated fatty acid residues having 18 carbon atoms and two double bonds; and
(vi) from 2 to 4% by weight, more preferably from 2.3 to 3.8% by weight of unsaturated fatty acid residues having 18 carbon atoms and three double bonds.

Preferably, from 30 to 40% by weight of the saturated fatty acid residues having 16 carbon atoms in the fat blend are present at the 2-position of a triglyceride.

Typically, the fat blend comprises from 30 to 50% by weight polyunsaturated fatty acids, such as from 35 to 45% by weight, and/or from 20 to 40% by weight saturated fatty acids, such as from 25 to 35% by weight, and/or from 20 to 40% by weight mono unsaturated fatty acids, such as from 27 to 37% by weight.

The fat blend preferably comprises 1,3-dioleoyl-2-palmitoyl glyceride (OPO) in an amount of at least 8% by weight of the total weight of the fat blend, more preferably at least 15% by weight, such as from 20 to 40% by weight or from 25 to 35% by weight.

A preferred fat blend preferably comprises not more than 30% by weight, more preferably not more than 25% by weight of palmitic acid, based on total fatty acid content, and/or at least 25% by weight, more preferably at least 30% by weight of the palmitic acid residues are present in the 2-position of the glyceride.

Preferably, the tripalmitoylglyceride (PPP) content of the fat blend is less than 9 % by weight (more preferably less than 8 % or less than 5%) by weight of the fat blend.

Typically, the fat blend comprises trioleoyl glyceride (OOO) in an amount of from 35 to 55% by weight, such as from 40 to 50% by weight.

In one embodiment, there is provided a fat composition comprising from 60 to 70% by weight, preferably from 64 to 68% by weight of the fat blend and from 30 to 40% by weight, more preferably from 31 to 35% by weight of fat from cow's milk.

The fat blend or fat composition may be suitable for replacing at least a part of the fat in infant food formulations. Infant food formulations may comprise the fat blend or fat composition together with one or more of protein, carbohydrate, minerals and vitamins. The fat blend or fat composition may be in liquid form or in the form of a dry formulation, such as a powder or granules. The present invention also therefore contemplates a method for the production of infant food compositions comprising fat, protein and carbohydrate components, for example in the approximate relative weight proportions 2.5:1:5, wherein at least a part of the fat normally used in such formulations is replaced by the fat composition or fat blend made. Dry formulations containing this mixture, together with additional components customary in such formulations such as protein, carbohydrate, minerals and vitamins, may be dispersed for use in sufficient water to produce an emulsion of approximately 2 to 5 grams of fat per 100 ml of dispersion.

The fat blends or fat compositions are optionally blended with a source of docosahexaenoic acid (DHA) or eicosapentaenoic acid (EPA), such as fish oil or a microbial oil, preferably in a weight ratio of from 10:1 to 1:10.

The fat blends or fat compositions are particularly suitable for use in an infant formula. The present invention therefore also contemplates the use of the fat blends or fat compositions in the preparation of an infant formula.

The infant formula of the invention comprises a fat blend and milk fat. The fat blend represents from 40 to 95% by weight, more preferably from 50 to 90% by weight, such as from 55 to 80% by weight, most preferably from 60 to 70% by weight of the total fat content of the infant formula. The milk fat represents from 5 to 60% by weight, more preferably from 10 to 50% by weight, such as from 20 to 45% by weight, most preferably from 30 to 40% by weight of the total fat content of the infant formula. Preferably, the fat blend is as described above.

In a preferred embodiment, the milk fat is derived from cow's milk. By the term "derived from cow's milk" it is meant that the milk fat is not separated from the other components of the cow's milk (apart from water), i.e., the milk fat is present in the infant formula as a component of cow's milk. This may have the advantage that a much better tasting infant formula is produced. Most preferably, the cow's milk is full fat cow's milk.

Therefore, in a preferred embodiment, the infant formula comprises the fat blend and cow's milk (preferably full fat cow's milk), wherein the fat blend represents from 40 to 95% by weight, more preferably from 50 to 90% by weight, such as from 55 to 80% by weight, most preferably from 60 to 70% by weight of the total fat content of the infant formula and the milk fat (which is present as a component of the cow's milk) represents from 5 to 60% by weight, more preferably from 10 to 50% by weight, such as from 20 to 45% by weight, most preferably from 30 to 40% by weight of the total fat content of the infant formula.

Preferably, the infant formula further comprises one or more additional components. The one or more additional components are typically selected from the group consisting of whey protein, carbohydrates, minerals, vitamins and mixtures thereof.

The infant formula of the present invention can be prepared in a variety of product forms. Typically, the infant formula is prepared in the form of a ready-to-feed liquid, a liquid concentrate for dilution prior to consumption, or a powder that is reconstituted prior to consumption. It will appreciated by those skilled in the art that the liquid concentrates or powders may be reconstituted ready for use in any suitable liquid medium, for example, cow's milk (preferably full fat cow's milk) and/or water.

For example, the infant formula can be prepared using the fat blend as described above in the form of a powder or liquid concentrate, which is formulated with cow's milk. In an alternative example, the infant formula can be prepared using the fat composition as described above in the form of a powder or liquid concentrate, one or more additional components also in the form of a powder or liquid, which components are both then formulated in water.

In a preferred embodiment, the infant formula is in the form of a powder, which is adapted to be reconstituted prior to consumption. The infant formula in the form of a powder preferably has a total fat content of from 20 to 40% by weight, more preferably from 25 to 35% by weight.

The infant formula of the present invention preferably has one or more advantages over conventional infant formulae such as appropriate flavour properties and/or dispersion properties and/or whiteness of colour.

The invention also provides a process for preparing a fat blend comprising:
(i) subjecting one or more palm oil stearin fractions comprising tripalmitoyl glyceride to enzymic transesterification with oleic acid or a non-glyceride ester thereof using an enzyme having selectivity for the 1- and 3-positions of a glyceride; and
(ii) separating palmitic acid or palmitic non-glyceride esters from the product obtained in (i) to form a triglyceride composition.

The palm oil stearin fractions may be a single palm oil stearin or a mixture of palm oil stearins, for example obtained in different fractionation processes and/or having different physical and/or chemical properties, such as different melting temperatures or different iodine values (IVs). Preferably, the one or more palm oil stearin fractions is or are bleached and deodorised before the interesterification step. Bleaching and deodorising can be carried out using techniques that are well known in the art.

The term "stearin", as used in this specification, includes a triglyceride mixture or fat blend from which at least 10 % by weight of the lower melting constituents have been removed by some kind of fractionation, e.g., dry fractionation or solvent fractionation.

The optional bleaching of the palm oil stearin is typically performed above 95 °C, more preferably above 100 °C (such as at from 105 °C to 120 °C). In the deodorising step, volatile impurities are removed from the palm oil stearin to yield deodorised palm oil stearin, typically at temperatures above 200 °C. The impurities removed in the deodorising step commonly include free fatty acids, aldehydes, ketones, alcohols and other hydrocarbon impurities. The bleaching and deodorising may be carried out in a single process step or two or more process steps. For example, the steps may be carried out at reduced pressures (e.g., 10 mm Hg or below), wherein the palm oil stearin is contacted with steam to help vaporise the impurities. Bleaching and deodorising the palm oil stearin may help to improve the yield of the process.

Preferably, the one or more palm oil stearins is or are provided by fractionating palm oil or a derivative thereof Although fractionation may be carried out with or without a solvent, it is preferred that the fractionation of the palm oil comprises dry fractionation. Thus, the process of fractionation is preferably carried out in the absence of a solvent.

The palm oil stearin preferably has an iodine value (IV) from about 2 to about 40, more preferably from about 8 to about 35. Palm oil stearin having an iodine value of from 10 to 18 is particularly preferred. The iodine value is determined according to standard methods known in the art (e.g., ASTM D5554-95 (2001)).

In a preferred embodiment, a palm oil stearin which comprises a mixture of at least two palm oil stearins having different iodine values is employed. For example, the palm oil stearin may comprise a mixture of a first palm oil stearin having an iodine value of from about 10 to about 20 and a second palm oil stearin having an iodine value of from about 25 to 50.

Optionally, the one or more palm oil stearins are interesterified to form a randomly interesterified palm oil stearin before step (i). This may be carried out using any method that effects random interesterification of the triglycerides in the one or more palm oil stearins.

In step (i) of the process, the palm oil stearin is selectively transesterified with oleic acid or an oleoyl ester. This reaction preferentially replaces residues at the 1- and 3- positions of the glyceride relative to those at the 2- position. Thus, the product has greater amounts of the oleoyl residue at the 1- and 3- positions than at the 2- position. In the enzymic transesterification of step (i), the fatty acids on the 2-position of the triglycerides typically do not change (for example, less than 40 % by moles (or weight) of fatty acyl groups in the 2-position, more preferably less than 20 %, such as less than 5 % or less than 1 %, change during the process). The conditions of the process are selected so as to provide the desired degree of selectivity from the enzyme. Preferred enzymes for use in step (i) are lipases from *Rhizopus delemar* and *Rhizomucor miehei.* The transesterification reaction is typically performed to reach or approach equilibrium at a conversion ratio of a minimum of at least 50 %, preferably at least 60 %, most preferably at least 70 %.

Preferably, in the transesterification reaction of step (i), palm oil stearin is mixed with an oleic acid concentrate (comprising free oleic acid at a concentration of greater than 65 % by weight, preferably greater than 70 % by weight, most preferably greater than 75 % by weight). Alternatively, the oleic acid may be provided as a mixture comprising oleic acid (preferably in an amount of greater than 65 % by weight), linoleic acid and, optionally, one or more other fatty acids. The ratio of palm oil stearin to oleic acid concentrate is preferably from 0.1:1 to 2:1, more preferably from 0.4:1 to 1.2:1, even more preferably from 0.4:1 to 1:1, most preferably from 1:1.1 to 1:2 on a weight basis. The reaction is preferably carried out at a temperature of from 30 °C to 90 °C, preferably from 50 °C to 80 °C, such as about 60 °C to 70 °C, and may be conducted batchwise or in continuous fashion, with or without a water-immiscible organic solvent.

Before the enzyme transesterification reaction of step (i), the humidity is preferably controlled to a water activity between 0.05 and 0.55, preferably between 0.1 and 0.5, depending on the type of biocatalyst enzyme system used. The reaction may be performed, for example, at 60 °C in a stirred tank or in a packed bed reactor over biocatalysts, based on concentrates of Lipase D (*Rhizopus oryzae,* previously classified as *Rhizopus delemar,* from Amano Enzyme Inc., Japan) or immobilised concentrates of *Rhizomucor miehei* (Lipozyme RM IM from Novozymes A/S, Denmark).

The non-glyceride esters of oleic acid that are optionally used in the process, in addition to or as an alternative to, oleic acid, are preferably alkyl esters. The term "alkyl", as used herein, includes straight chain or branched saturated hydrocarbons having from 1 to 12, more preferably 1 to 6, carbon atoms.

In step (ii) of the process, palmitic acid or palmitic non-glyceride esters are separated from the desired OPO glyceride product. It will be appreciated that the separation is not usually complete and that both the materials separated and the product that remains will be mixtures. Also, the separation of the palmitic acid or palmitic non-glyceride esters will normally also separate other fatty acids or fatty acid non-glyceride esters from the product. The term "fatty acid", as used herein, refers to straight chain, saturated or unsaturated, carboxylic acids having from 12 to 24 carbon atoms.

In order to separate palmitic acid and other fatty acids or palmitic non-glyceride esters and other glycerides from OPO in step (ii), the transesterified mixture (optionally after further treatment, such as isolation of the fat phase) is preferably distilled. Distillation is preferably carried out at low pressure (e.g., lower than 10 mbar) and elevated temperatures (e.g., greater than 200 °C) to remove the fatty acids from the product triglyceride fraction.

The process may further comprise the step of dry fractionating the product obtained in (ii) to form a fraction comprising an increased amount of OPO. However, this step may not be required depending on the purity of the final product and the desired end use of the product.

Typically, the process further comprises blending the triglyceride composition of (ii) with at least one liquid oil. Suitable liquid oils include those mentioned above for use in the fat blend.The fat blend formed is preferably bleached and deodorised. Bleaching and deodorising can be carried out by methods well known in the art.

The present invention also provides a process for preparing an infant formula comprising:
(a) dispersing a fat blend comprising saturated fatty acid residues having 16 carbon atoms and unsaturated fatty acid residues having 18 carbon atoms and one double bond, wherein at least 30% by weight of the saturated fatty acid residues having 16 carbon atoms are present at the 2-position in a triglyceride, in cow's milk (preferably full fat cow's milk); and
(b) optionally pasteurising the product of (a).

The process for preparing the infant formula may comprise one or more further steps in addition to (a) and (b).

The infant formula is typically prepared in the form of a ready-to-feed liquid, a liquid concentrate for dilution prior to consumption, or a powder that is reconstituted prior to consumption. The methods of preparation of such formulations are well known in the art. For example, the process may involve the initial formation of an aqueous slurry comprising the fat blend and cow's milk, optionally with further carbohydrates, proteins, lipids, stabilizers or other formulation aids, vitamins, minerals, or combinations thereof. The slurry may be emulsified and/or pasteurised and/or homogenised. Various other solutions, mixtures, or other materials may be added to the resulting emulsion before, during, or after further processing. This emulsion can then be further diluted, heat-treated, and packaged to form a ready-to-feed or concentrated liquid, or it can be heat-treated and subsequently processed and packaged as a reconstitutable powder, e.g., spray dried, dry mixed or agglomerated.

Preferably, the mixture of the fat blend and cow's milk in (a) is homogenised.

In a preferred embodiment, the infant formula is in the form of a powder. Thus, the process preferably further comprises removing water from the product obtained in (a) or (b). This can be achieved using any suitable technique known in the art. Preferably, the product obtained in (a) or (b) is spray-dried.

Surprisingly, the product produced by dispersing the fat blend of the invention in cow's milk has unexpected advantageous processing properties, despite the high liquid oil content of the fat blend. For example, the ease at which an emulsion is produced may be improved. Also, it may be easier to spray dry the product.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1

### Preparation of fat blend:

Reaction vessel was rinsed with hot deionised water. One batch of 300 kg of the fat blend was prepared by blending the following components (which have fatty acid compositions as shown in Table 1 below):
- Triglyceride composition - 112kg (37.3%);
- Refined sunflower oil - 44.7kg (14.9%); and
- Refined soybean oil -143.4kg (47.8%).

A sample was removed and the mixture was heated to 85°C.

The triglyceride composition used above may be prepared by the methods described in WO 2007/029018.

### Example 2

The fat blend of Example 1 was purified as follows:

### Bleaching:

0.1% citric acid solution (30% wt) was added to the fat blend and the mixture stirred for 15 mins/ATP ("ATP" refers to atmospheric pressure). Then 0.15% deionised water was added and the mixture stirred for a further 15 mins/ATP. 1% bleaching earth and 0.7% hyflo (Harbolite) was then added. The mixture was then dried for approximately 30 mins and then bleached at a pressure of 100 mbar for 30mins. After this, the fat blend was filtered to the deodorizer via 10 + 1µ filter.

### Deodorising:

The fat blend was deodorised for 3 hours at a maximum temperature of 218°C. After this, the fat blend was cooled down to 50°C. Upon reaching a temperature of 120°C, 0.005% citric acid (30% wt solution) was added.

10 kg of the refined material (without anti-oxidant) was tapped in a drum via 1 µ under nitrogen.

To the rest of the refined material, 0.05%(wt) Tocoblend L50 IP (anti-oxidant) was added and tapped into 23x10kg drums.

### Results

**Table 1. The starting materials and products of Examples 1 and 2 have the following fatty acid compositions.**

| | Sunflower oil | Soybean oil | triglyceride composition | Fat blend of Example 1 | Fat blend of Example 2 |
|---|---|---|---|---|---|
| FFA ol | 0.03 | 0.02 | 0.08 | 0.06 | 0.02 |
| PV-man | 1.7 | 0.8 | 2.5 | 2 | 0 |
| Sn2 C 16 | ** | ** | Pending | Pending | Pending |
| H2O | 0.02 | 0.02 | | 0.02 | 0 |
| Fe | | | | | 0.17 |
| C12:0 | 0 | 0 | 0.36 | 0.14 | 0.27 |
| C15:0 | 0 | 0 | 0 | 0 | 0 |
| C14:0 | 0.1 | 0.1 | 0.8 | 0.3 | 0.4 |
| C16:0 | 6.7 | 10.8 | 44.1 | 22.5 | 23.2 |
| C16:1C | 0.1 | 0.1 | 0.1 | 0.1 | 0.1 |
| C17:0 | 0 | 0.1 | 0.1 | 0.1 | 0.1 |
| C18:0 | 3.4 | 3 | 3.8 | 3.4 | 3.3 |
| C18:1T | 0 | 0 | 0.2 | 0.1 | 0.1 |
| C18:1C | 22.9 | 25.6 | 44.9 | 32.3 | 31.9 |
| C18:2T | 0.6 | 0.5 | 0.2 | 0.4 | 0.6 |
| C18:2C | 64.2 | 53.2 | 4.7 | 37 | 36.3 |
| C18:3T | 0.1 | 0.6 | 0.1 | 0.3 | 0.3 |
| C18:3C | 0.7 | 5.1 | 0.2 | 2.6 | 2.2 |
| TTrans | 0.7 | 1.1 | 0.4 | 0.8 | 0.9 |
| C20:0 | 0.3 | 0.3 | 0.2 | 0.3 | 0.3 |
| C20:1C | 0.1 | 0.2 | 0.1 | 0.2 | 0.5 |
| C22:0 | 0.6 | 0.4 | 0.2 | 0.4 | 0.4 |
| C24:0 | 0.2 | 0.2 | 0.1 | 0.1 | 0.1 |
| SAFA | 11.3 | 14.8 | 49.6 | 27.1 | 28.1 |
| MUFA | 23.1 | 25.8 | 45.3 | 32.6 | 32.6 |
| PUFA | 65.6 | 59.4 | 5.1 | 40.3 | 39.3 |

**Table 2. The triglyceride content of the fat blend of Example 2 has the following composition:**

| | % amount by weight of triglyceride |
|---|---|
| C28 | 0.1 |
| C30 | 0.2 |
| C32 | 0 |
| C34 | 0.1 |
| C36 | 0.1 |
| C38 | 0.1 |
| C40 | 0.1 |
| C42 | 0.1 |
| C44 | 0.1 |
| C46 | 0.3 |
| C48 (PPP) | 3 |
| C50 (PPO&POP) | 16.4 |
| C52 (OPO&OOP) | 32.4 |
| C54 (OOO) | 45.5 |
| C56 | 1 |
| C58 | 0.6 |
| C60 | 0.2 |

### Example 3

### Preparation of the infant formula:

The fat blend of Example 2 is used to prepare an infant formula of the invention.

The fat blend represents 2/3 by weight of the total fat content of the infant formula and the fat from cow's milk represents 1/3 by weight of the total fat content of the infant formula. The infant formula also contains whey powder and other nutritional ingredients.

### Example 4

An infant formula of the invention was prepared. The fat content of the infant formula had the following composition:

| Fatty acid | % in weight |
|---|---|
| C4:0 | 2.2 |
| C8:0 | 0.5 |
| C10:0 | 0.9 |
| C12:0 | 1.5 |
| C14:0 | 3.4 |
| C14:1 | 0.3 |
| C15:0 | 0.3 |
| C16:0 | 20.7 |
| C16:1 | 0.5 |
| C17:0 | 0.2 |
| C18:0 | 2.7 |
| C18:1 | 30.7 |
| C18:2 | 25.2 |
| 16:0 Sn-2 | 38.2 |

## Claims

1. An infant formula comprising:
(I) a fat blend comprising:
(a) from 55 to 70% by weight of at least one liquid oil; and
(b) from 30 to 45% by weight of a triglyceride composition comprising from 40 to 50% by weight of saturated fatty acid residues having 16 carbon atoms and from 40 to 50% by weight of unsaturated fatty acid residues having 18 carbon atoms and one double bond, and wherein from 50 to 60% by weight of the saturated fatty acid residues having 16 carbon atoms are present at the 2-position in a triglyceride,
wherein the fat blend comprises:
(i) from 0.1 to 1.5% by weight of saturated fatty acid residues having from 12 to 14 carbon atoms;
(ii) from 20 to 27% by weight of saturated fatty acid residues having 16 carbon atoms;
(iii) from 2 to 6.5% by weight of saturated fatty acid residues having 18 carbon atoms;
(iv) from 28 to 37% by weight of unsaturated fatty acid residues having 18 carbon atoms and one double bond;
(v) from 30 to 40% by weight of unsaturated fatty acid residues having 18 carbon atoms and two double bonds; and
(vi) from 2 to 4% by weight of unsaturated fatty acid residues having 18 carbon atoms and three double bonds, and
(II) milk fat,
wherein the fat blend represents from 40 to 95% by weight of the total fat content of the infant formula and the milk fat represents from 5 to 60% by weight of the total fat content of the infant formula.

2. Infant formula according to Claim 1, wherein the milk fat is derived from cow's milk.

3. Infant formula according to Claim 1 or Claim 2, wherein the fat blend comprises from 10 to 20% by weight of sunflower oil and from 40 to 55% by weight of soybean oil.

4. Infant formula according to any one of Claims 1 to 3, wherein from 30 to 40% by weight of the saturated fatty acid residues having 16 carbon atoms in the fat blend are present in the 2-position of a triglyceride.

5. Infant formula according to any one of Claims 1 to 4 further comprising one or more additional components selected from the group consisting of whey protein, carbohydrates, minerals, vitamins and mixtures thereof.

6. Infant formula according to any one of Claims 1 to 5 in the form of a powder.

7. A process for preparing an infant formula according to any one of Claims 1 to 6 comprising:
(a) dispersing a fat blend as defined in (I) in Claim 1, in cow's milk;
(b) optionally pasteurising the product of (a); and
(c) removing water from the product obtained in (a) or (b).

## Patentansprüche

1. Säuglingsnahrung, Folgendes umfassend:
(I) eine Fettmischung, Folgendes umfassend:
(a) von 55 bis 70 Gew.-% wenigstens eines flüssigen Öls; und
(b) von 30 bis 45 Gew.-% einer Triglyceridzusammensetzung, umfassend von 40 bis 50 Gew.-% gesättigte Fettsäurereste mit 16 Kohlenstoffatomen und von 40 bis 50 Gew.-% ungesättigte Fettsäurereste mit 18 Kohlenstoffatomen und einer Doppelbindung, und wobei von 50 bis 60 Gew.-% der gesättigten Fettsäurereste mit 16 Kohlenstoffatomen an der 2-Stellung in einem Triglycerid vorhanden sind, wobei die Fettmischung Folgendes umfasst:
(i) von 0,1 bis 1,5 Gew.-% gesättigte Fettsäurereste mit 12 bis 14 Kohlenstoffatomen;
(ii) von 20 bis 27 Gew.-% gesättigte Fettsäurereste mit 16 Kohlenstoffatomen;
(iii) von 2 bis 6,5 Gew.-% gesättigte Fettsäurereste mit 18 Kohlenstoffatomen;
(iv) von 28 bis 37 Gew.-% ungesättigte Fettsäurereste mit 18 Kohlenstoffatomen und einer Doppelbindung;
(v) von 30 bis 40 Gew.-% ungesättigte Fettsäurereste mit 18 Kohlenstoffatomen und zwei Doppelbindungen; und
(vi) von 2 bis 4 Gew.-% ungesättigte Fettsäurereste mit 18 Kohlenstoffatomen und drei Doppelbindungen, und
(II) Milchfett,
wobei die Fettmischung von 40 bis 95 Gew.-% des Gesamtfettgehalts der Säuglingsnahrung darstellt und das Milchfett von 5 bis 60 Gew.-% des Gesamtfettgehalts der Säuglingsnahrung darstellt.

2. Säuglingsnahrung nach Anspruch 1, wobei das Milchfett von Kuhmilch stammt.

3. Säuglingsnahrung nach Anspruch 1 oder 2, wobei die Fettmischung von 10 bis 20 Gew.-% Sonnenblumenöl und von 40 bis 55 Gew.-% Sojaöl umfasst.

4. Säuglingsnahrung nach einem der Ansprüche 1 bis 3, wobei von 30 bis 40 Gew.-% der gesättigten Fettsäurereste mit 16 Kohlenstoffatomen in der Fettmischung in der 2-Stellung eines Triglycerids vorhanden sind.

5. Säuglingsnahrung nach einem der Ansprüche 1 bis 4, ferner umfassend eine oder mehrere zusätzliche Komponenten, die ausgewählt sind aus der Gruppe bestehend aus Molkenprotein, Kohlenhydraten, Mineralien, Vitaminen und Gemischen daraus.

6. Säuglingsnahrung nach einem der Ansprüche 1 bis 5 in der Form eines Pulvers.

7. Vorgang zum Herstellen einer Säuglingsnahrung nach einem der Ansprüche 1 bis 6, Folgendes umfassend:
(a) Dispergieren einer Fettmischung wie definiert in (I) in Anspruch 1 in Kuhmilch;
(b) optionales Pasteurisieren des Produkts von (a); und
(c) Entfernen von Wasser aus dem in (a) oder (b) gewonnenen Produkt.

## Revendications

1. Préparation pour nourrissons comprenant :
(I) un mélange de matières grasses comprenant :
(a) de 55 à 70 % en poids d'au moins une huile liquide ; et
(b) de 30 à 45 % en poids d'une composition de triglycéride comprenant de 40 à 50 % en poids de résidus d'acides gras saturés ayant 16 atomes de carbone et de 40 à 50 % en poids de résidus d'acides gras insaturés ayant 18 atomes de carbone et une double liaison, et dans laquelle de 50 à 60 % en poids des résidus d'acides gras saturés ayant 16 atomes de carbone sont présents à la position 2 dans un triglycéride,
dans laquelle le mélange de matières grasses comprend :
(i) de 0,1 à 1,5 % en poids de résidus d'acides gras saturés ayant de 12 à 14 atomes de carbone ;
(ii) de 20 à 27 % en poids de résidus d'acides gras saturés ayant 16 atomes de carbone ;
(iii) de 2 à 6,5 % en poids de résidus d'acides gras saturés ayant 18 atomes de carbone ;
(iv) de 28 à 37 % en poids de résidus d'acides gras insaturés ayant 18 atomes de carbone et une double liaison ;
(v) de 30 à 40 % en poids de résidus d'acides gras insaturés ayant 18 atomes de carbone et deux doubles liaisons ; et
(vi) de 2 à 4 % en poids de résidus d'acides gras insaturés ayant 18 atomes de carbone et trois doubles liaisons, et
(II) de la matière grasse de lait,
dans laquelle le mélange de matières grasses représente de 40 à 95 % en poids de la teneur totale en matière grasse de la préparation pour nourrissons et la matière grasse de lait représente de 5 à 60 % en poids de la teneur totale en matière grasse de la préparation pour nourrissons.

2. Préparation pour nourrissons selon la revendication 1, dans laquelle la matière grasse de lait est dérivée de lait de vache.

3. Préparation pour nourrissons selon la revendication 1 ou la revendication 2, dans laquelle le mélange de matières grasses comprend de 10 à 20 % en poids d'huile de tournesol et de 40 à 55 % en poids d'huile de soja.

4. Préparation pour nourrissons selon l'une quelconque des revendications 1 à 3, dans laquelle de 30 à 40 % en poids des résidus d'acides gras saturés ayant 16 atomes de carbone dans le mélange de matières grasses sont présents à la position 2 d'un triglycéride.

5. Préparation pour nourrissons selon l'une quelconque des revendications 1 à 4, comprenant en outre un ou plusieurs composants supplémentaires choisis dans le groupe constitué par une protéine de lactosérum, des glucides, des minéraux, des vitamines et leurs mélanges.

6. Préparation pour nourrissons selon l'une quelconque des revendications 1 à 5, sous forme de poudre.

7. Procédé de préparation d'une préparation pour nourrissons selon l'une quelconque des revendications 1 à 6, comprenant :
(a) la dispersion d'un mélange de matières grasses défini en (I) à la revendication 1, dans du lait de vache ;
(b) la pasteurisation facultative du produit de (a) ; et
(c) l'élimination de l'eau du produit obtenu en (a) ou (b).
